# EUROPÄISCHE PATENTANMELDUNG

(11) **EP 4 389 487 A1**
(43) Veröffentlichungstag der Anmeldung: **26.06.2024**
(21) Anmeldenummer: 23204780.3
(22) Anmeldetag: 20.10.2023
(51) Int. Cl.: B60K 25/02, A62C 27/00

(54) **BOS-FAHRZEUG, INSBESONDERE FEUERWEHRFAHRZEUG**

(30) Priorität: 19.12.2022 DE 102022133933
(71) Anmelder: Albert Ziegler GmbH, 89537 Giengen a. d. Brenz (DE)
(72) Erfinder: Quintenz, Tobias, 89275 Elchingen (DE); Milardovic, Ivan, 89522 Heidenheim (DE); Ockert, Niels, 89537 Giengen (DE)
(74) Vertreter: Patentanwälte Magenbauer & Kollegen Partnerschaft mbB

(57) **Zusammenfassung**

Es wird ein BOS-Fahrzeug (1) vorgeschlagen, bei dem es sich insbesondere um ein Feuerwehrfahrzeug (1a) handelt und das über eine Antriebseinheit (4) mit Antriebsmotor (7) und Fahrzeuggetriebe (8) sowie über eine durch die Antriebseinheit (4) antreibbare Feuerlöschpumpe (12) verfügt. Für die Kraftübertragung zwischen der Antriebseinheit (4) und der Feuerlöschpumpe (12) ist zum einen ein mechanischer Antriebsstrang (14) und zum anderen ein diesbezüglich paralleler hydraulischer Antriebsstrang (15) vorhanden, wobei der hydraulische Antriebsstrang (15) über eine Hydraulikpumpe (23) und einen Hydraulikmotor (25) verfügt. Durch die beiden auf unterschiedlichen Technologien basierenden Antriebsstränge (14, 15) ergibt sich eine hohe Flexibilität hinsichtlich der Einstellung der gewünschten Förderleistung der Feuerlöschpumpe (12) .

## Beschreibung

Die Erfindung betrifft BOS-Fahrzeug, insbesondere Feuerwehrfahrzeug, mit einer Antriebseinheit, die einen Antriebsmotor und ein an dem Antriebsmotor angeordnetes Fahrzeuggetriebe aufweist, wobei das Fahrzeuggetriebe über einen Hauptabtrieb verfügt, an dem zum Hervorrufen einer Fahrzeugbewegung des BOS-Fahrzeuges ein Antriebsdrehmoment abgreifbar ist, und mit einer zum Fördern eines Löschfluides ausgebildeten Feuerlöschpumpe, die zum Ermöglichen ihres Förderbetriebes über einen mechanischen Antriebsstrang mit einem Nebenabtrieb der Antriebseinheit drehmomentübertragend koppelbar oder gekoppelt ist.

Unter sogenannten BOS-Fahrzeugen - das Kürzel "BOS" steht für "Behörden und Organisationen mit Sicherheitsaufgaben" - finden sich Fahrzeugtypen, die mit einer Feuerlöschpumpe ausgestattet sind. Dies trifft beispielsweise auf Löschfahrzeuge des technischen Hilfswerkes und insbesondere auf Feuerwehrfahrzeuge zu. Die in der Regel als Kreiselpumpe ausgebildete Feuerlöschpumpe ist üblicherweise als Einbaupumpe im betreffenden Fahrzeug fest verbaut und kann in einen Förderbetrieb versetzt werden, in dem sie ein Löschfluid - sei es eine Flüssigkeit, Schaum oder ein Flüssigkeits-Schaum-Gemisch - aus einem Reservoir ansaugt und zur bestimmungsgemäßen Verwendung unter hohem Druck ausgibt. Den Fahrantrieb des BOS-Fahrzeuges übernimmt eine in das Fahrzeug integrierte Antriebseinheit, die über einen Antriebsmotor und ein an den Antriebsmotor angeflanschtes Fahrzeuggetriebe verfügt, wobei ein Hauptabtrieb des Fahrzeuggetriebes zum Hervorrufen einer Fahrzeugbewegung mit meist mehreren Fahrzeugrädern antriebsmäßig koppelbar oder gekoppelt ist. Die Antriebseinheit des BOS-Fahrzeuges übernimmt darüber hinaus eine Antriebsfunktion bezüglich der Feuerlöschpumpe, zu welchem Zweck sie zusätzlich zu dem Hauptabtrieb einen Nebenabtrieb aufweist, der über einen mit einer Gelenkwelle ausgestatteten mechanischen Antriebsstrang mit der Feuerlöschpumpe antriebsmäßig koppelbar ist, um den Förderbetrieb der Feuerlöschpumpe hervorzurufen. Soweit das BOS-Fahrzeug für einen sogenannten "Pump and Roll"-Betrieb ausgelegt ist, kann der Förderbetrieb der Feuerlöschpumpe zeitgleich mit einer Fahrzeugbewegung ausgeführt werden, was die Beherrschung besonderer Brandsituationen erleichtert. Da die momentane Förderleistung der Feuerlöschpumpe von der Drehzahl des Antriebsmotors des BOS-Fahrzeuges abhängt und folglich durch die spezifischen Einsatzbedingungen beeinflusst wird, können Unregelmäßigkeiten in der Förderleistung der Feuerlöschpumpe auftreten, die zu Beeinträchtigungen eines Löschvorganges führen können.

Der Erfindung liegt die Aufgabe zugrunde, bei einem mit einer Feuerlöschpumpe ausgestatteten BOS-Fahrzeug Maßnahmen zu treffen, die es ermöglichen, die Förderleistung der Feuerlöschpumpe an die jeweiligen Einsatzbedingungen flexibel anzupassen und dadurch auch bei ungünstigen Randbedingungen eine effektive Brandbekämpfung durchzuführen.

Diese Aufgabe wird bei einem BOS-Fahrzeug in Verbindung mit den eingangs genannten Merkmalen dadurch gelöst, dass die Feuerlöschpumpe zum Ermöglichen ihres Förderbetriebes über einen zusätzlich zu dem mechanischen Antriebsstrang vorhandenen hydraulischen Antriebsstrang mit der Antriebseinheit antriebsmäßig koppelbar oder gekoppelt ist, wobei der hydraulische Antriebsstrang eine durch die Antriebseinheit mechanisch antreibbare Hydraulikpumpe und einen durch die Hydraulikpumpe hydraulisch antreibbaren, mit der Feuerlöschpumpe drehmomentübertragend koppelbaren oder gekoppelten Hydraulikmotor aufweist.

Auf diese Weise stehen zum Antreiben der Feuerlöschpumpe zwei parallelgeschaltete Antriebsstränge zur Verfügung, die beide leistungsmäßig von der Antriebseinheit des BOS-Fahrzeuges gespeist werden, jedoch auf unterschiedlichen Prinzipien der Kraftübertragung beruhen. Zum einen ermöglicht der mechanische Antriebsstrang eine rein mechanische Kraftübertragung, und zum anderen erlaubt der hydraulische Antriebsstrang eine Kraftübertragung ohne eine direkte mechanische Kopplung auf der Basis eines hydraulischen Wirkprinzips. Diese beiden unterschiedlichen Kraftübertragungsprinzipien begünstigen eine Anpassung der Förderleistung der Feuerlöschpumpe an die momentanen äußerlichen Gegebenheiten und die Einhaltung einer gleichmäßigen Leistungsabgabe auf einem anwendungsspezifisch optimalen Niveau. Bevorzugt ist die Antriebstechnik dahingehend ausgelegt, dass die beiden Antriebsstränge nach Bedarf jeweils nur einzeln oder auch zeitgleich gemeinsam betreibbar sind. Durch die Nutzung des hydraulischen Antriebsstranges kann im gewissen Rahmen eine von Drehzahlschwankungen des Antriebsmotors unabhängige, gleichmäßige Förderleistung der Feuerlöschpumpe gewährleistet werden. Mit der gleichzeitigen Nutzung beider Antriebsstränge lassen sich besonders hohe Förderleistungen bei moderaten Motordrehzahlen erzielen, so dass der Energieverbrauch geringgehalten werden kann. Die Erfindung bietet mithin ein funktionell und energetisch vorteilhaftes, hybrides Kraftübertragungskonzept zum Antreiben der Feuerlöschpumpe eines BOS-Fahrzeuges.

Vorteilhafte Weiterbildungen der Erfindung gehen aus den Unteransprüchen hervor.

Zweckmäßigerweise ist der mechanische Antriebsstrang unter Verwendung einer Gelenkwelle realisiert, die auf der einen Seite mit dem Nebenabtrieb und auf der anderen Seite mit der Feuerlöschpumpe gekoppelt werden kann oder gekoppelt ist. Zur Kopplung weisen der Nebenabtrieb und die Feuerlöschpumpe zweckmäßigerweise jeweils eine Zapfwelle auf, auf die die Gelenkwelle formschlüssig aufsteckbar oder aufgesteckt ist.

Der hydraulische Antriebsstrang ist zweckmäßigerweise mit einem Durchflussregulierventil ausgestattet, das eine Steuerung des Hydraulikmotors ermöglicht, insbesondere eine variable Drehzahleinstellung des Hydraulikmotors zwecks Beeinflussung der Förderleistung der mit dem Hydraulikmotor zum Empfang eines sie antreibenden Drehmoments gekoppelten Feuerlöschpumpe. Das Durchflussregulierventil ist bevorzugt als ein Proportionalventil ausgebildet, das eine exakte und feinfühlige Einstellung des gewünschten Durchflusses erlaubt. Das Durchflussregulierventil sitzt in einer Fluidverbindung zwischen der Hydraulikpumpe und dem Hydraulikmotor, die zweckmäßigerweise mittels Hydraulikleitungen realisiert ist, beispielsweise aber auch in Form von Hydraulikkanälen in einen Kanalblock integriert sein kann. Das Durchflussregulierventil kann insbesondere von einem manuell und/oder elektrisch betätigbaren Typ sein.

Der mit dem mechanischen Antriebsstrang koppelbare oder gekoppelte Nebenabtrieb kann entweder am Fahrzeuggetriebe oder am Antriebsmotor der Antriebseinheit des BOS-Fahrzeuges angeordnet sein. Die Wahl des geeigneten Anbauortes orientiert sich insbesondere am grundsätzlichen Aufbau des BOS-Fahrzeuges.

Für die antriebsmäßige Kopplung mit dem mechanischen Antriebsstrang und dem hydraulischen Antriebsstrang ist die Feuerlöschpumpe zweckmäßigerweise mit einem zur besseren Unterscheidung als Eingangsgetriebe bezeichneten Getriebe ausgestattet. Das Eingangsgetriebe hat einen mit dem mechanischen Antriebsstrang drehmomentübertragend koppelbaren oder gekoppelten ersten Getriebeeingang und einen davon insbesondere unabhängigen, mit dem Hydraulikmotor des hydraulischen Antriebsstranges drehmomentübertragend koppelbaren oder gekoppelten zweiten Getriebeeingang. Bevorzugt ist das Eingangsgetriebe als ein Anbaugetriebe ausgebildet, das an eine Fördereinheit der Feuerlöschpumpe angebaut ist, die das Löschfluid aus einem Reservoir ansaugen und mit erhöhtem Druck an mindestens einem mit einem Druckschlauch bzw. Feuerlöschschlauch koppelbaren Druckausgang ausgeben kann.

Bei einer vorteilhaften Ausgestaltung ist zwischen den mechanischen Antriebsstrang und den ersten Getriebeeingang des Eingangsgetriebes eine schaltbare Getriebeeingangskupplung eingegliedert, die zur leichteren Unterscheidung als erste Getriebeeingangskupplung bezeichnet wird und ein wahlweises drehmomentmäßiges Ankuppeln oder Abkuppeln des mechanischen Antriebsstranges bezüglich des Eingangsgetriebes erlaubt.

Zusätzlich oder alternativ kann eine zur leichteren Unterscheidung als zweite Getriebeeingangskupplung bezeichnete Getriebeeingangskupplung zwischen den Hydraulikmotor des hydraulischen Antriebsstranges und den zweiten Getriebeeingang des Eingangsgetriebes eingegliedert sein, die ein drehmomentmäßiges Ankoppeln oder Abkoppeln des Hydraulikmotors bezüglich des Eingangsgetriebes ermöglicht.

Das BOS-Fahrzeug kann beispielsweise nur die erste Getriebeeingangskupplung oder nur die zweite Getriebeeingangskupplung aufweisen.

Die erste und/oder zweite Getriebeeingangskupplung ist bevorzugt elektrisch betätigbar ausgebildet, kann aber beispielsweise auch als eine Fliehkraftkupplung ausgeführt sein.

Jede vorhandene Getriebeeingangskupplung erlaubt es, den zugeordneten Antriebsstrang bezüglich der Feuerlöschpumpe wahlweise zu aktivieren oder zu deaktivieren, um Einfluss auf die Förderleistung des Feuerlöschpumpe zu nehmen. Die Feuerlöschpumpe lässt sich sehr einfach abschalten, indem jede Getriebeeingangskupplung deaktiviert wird. Durch eine selektive Aktivierung der beiden Getriebeeingangskupplungen kann sehr einfach eine Auswahl hinsichtlich eines für den Antrieb der Feuerlöschpumpe aktivierten Antriebsstranges getroffen werden.

Bei einer besonders kostengünstigen Ausgestaltung des BOS-Fahrzeuges erhalten sowohl der mechanische Antriebsstrang als auch der hydraulische Antriebsstrang ihre Antriebsleistung von dem Nebenabtrieb der Antriebseinheit. In diesem Fall ist nicht nur der mechanische Antriebsstrang, sondern auch die Hydraulikpumpe des hydraulischen Antriebsstranges mit dem Nebenabtrieb der Antriebseinheit drehmomentübertragend koppelbar oder gekoppelt. Dies lässt sich beispielsweise dadurch realisieren, dass dem Nebenabtrieb ein Verzweigungsgetriebe nachgeschaltet ist, das den Kraftfluss auf die beiden unterschiedlichen Arten von Antriebssträngen verteilt.

Eine bevorzugte Ausgestaltung eines Verzweigungsgetriebes ist als sogenannter Durchtrieb ausgebildet, der zweckmäßigerweise in die Hydraulikpumpe integriert ist. Der Durchtrieb ist ein Bestandteil des mechanischen Antriebsstranges und fungiert gleichzeitig als Rotationsantrieb für die Hydraulikpumpe. Beispielsweise hat der Durchtrieb an der Hydraulikpumpe eine mit dem Nebenabtrieb koppelbare oder gekoppelte mechanische Eingangsschnittstelle und eine schlupffrei drehmomentübertragend mit der Eingangsschnittstelle verbundene Ausgangsschnittstelle, an der eine eine Antriebsverbindung zur Feuerlöschpumpe herstellende Gelenkwelle anbringbar ist. Wenn der mechanische Antriebsstrang rotiert, erfolgt mittels des Durchtriebes ein gleichzeitiger rotativer Antrieb der Hydraulikpumpe, so dass in dem hydraulischen Antriebsstrang Hydraulikfliud gefördert wird, durch das der Hydraulikmotor betreibbar ist.

Bei dem für den Betrieb des hydraulischen Antriebsstranges genutzten Hydraulikfluid handelt es sich insbesondere un eine Flüssigkeit und bevorzugt um ein Hydraukilöl-

Als günstig wird es angesehen, wenn das BOS-Fahrzeug über eine schaltbare Nebenabtriebskupplung verfügt, die es erlaubt, den mechanischen Antriebsstrang wahlweise drehmomentmäßig an die Antriebseinheit anzukoppeln oder davon abzukoppeln. Bevorzugt ist die Nebenabtriebskupplung zwischen den Nebenabtrieb und den mechanischen Antriebsstrang eingegliedert. Alternativ kann sie dem Nebenabtrieb entgegen der Kraftflussrichtung vorgeschaltet sein. Die schaltbare Nebenabtriebskupplung erlaubt es, jeden mit dem Nebenabtrieb kooperierenden Antriebsstrang bei Bedarf zu deaktivieren, wodurch sich ein unnötiger Verschleiß vermeiden lässt. Beispielsweise kann die Nebenabtriebskupplung in Situationen deaktiviert werden, in denen das BOS-Fahrzeug ohne einen Löschvorgang eine Betriebsfahrt oder Bewegungsfahrt ausführt.

Anstatt beide Antriebsstränge durch ein und denselben Nebenabtritt anzutreiben, kann vorgesehen sein, dass die Antriebseinheit zusätzlich zu dem Nebenabtrieb einen zur besseren Unterscheidung als Zusatz-Nebenabtrieb bezeichneten weiteren Nebenabtrieb aufweist. In diesem Fall dient der Nebenabtrieb ausschließlich zum Antreiben des mechanischen Antriebsstranges, während der Zusatz-Nebenabtrieb ausschließlich dem Antreiben der Hydraulikpumpe des hydraulischen Antriebsstranges dient. Auf diese Weise können die beiden Antriebsstränge sehr einfach unabhängig voneinander betrieben werden, was eine besonders hohe Flexibilität hinsichtlich der Zufuhr der Antriebsleistung zur Feuerlöschpumpe bietet.

Dem hydraulischen Antriebsstrang kann zur Ermöglichung eines wahlweisen drehmomentmäßigen Ankoppelns oder Abkoppelns der Hydraulikpumpe bezüglich der Antriebseinheit eine schaltbare Kupplung zugeordnet sein, die zur besseren Unterscheidung als Zusatz-Nebenabtriebskupplung bezeichnet wird. Die Zusatz-Nebenabtriebskupplung ist vorzugsweise zwischen den Zusatz-Nebenabtrieb und die Hydraulikpumpe angegliedert. Mittels der Zusatz-Nebenabtriebskupplung kann der hydraulische Antriebsstrang nach Bedarf aktiviert oder deaktiviert werden, was eine komfortable, variable Leistungszufuhr zur Feuerlöschpumpe ermöglicht.

Wie schon der Nebenabtrieb, kann auch der Zusatz-Nebenabtrieb am Fahrzeuggetriebe oder am Antriebsmotor der Antriebseinheit angeordnet sein.

Als besonders günstig wird eine Ausgestaltung angesehen, bei der sowohl der Nebenabtrieb als auch der Zusatz-Nebenabtrieb am Fahrzeuggetriebe angeordnet ist.

Bevorzugt ist das BOS-Fahrzeug mit einer elektronischen Steuereinrichtung ausgestattet, durch die sowohl der mechanische Antriebsstrang als auch der hydraulische Antriebsstrang betriebsmäßig ansteuerbar ist. Der elektronischen Steuereinrichtung ist zweckmäßigerweise mindestens eine manuell betätigbare Bedieneinrichtung zugeordnet, über die sich Steuerbefehle eingeben lassen, auf deren Grundlage die für den Betrieb der Feuerlöschpumpe relevanten Fahrzeugkomponenten elektrisch angesteuert werden können. Bei diesen Komponenten handelt es sich beispielsweise um die erwähnten schaltbaren Kupplungen und/oder um das erwähnte Durchflussregulierventil.

Die optionale elektronische Steuereinrichtung ist insbesondere für eine voneinander unabhängige Ansteuerung des mechanischen Antriebsstranges und des hydraulischen Antriebsstranges ausgelegt, und zwar bevorzugt derart, dass die beiden Antriebsstränge sowohl jeweils für sich allein betrieben werden können - also zur gleichen Zeit jeweils nur der mechanische Antriebsstrang oder nur der hydraulische Antriebsstrang - als auch zeitgleich gemeinsam. Auf diese Weise kann die der Feuerlöschpumpe zugeleitete Antriebsleistung optimal auf die aktuellen Gegebenheiten abgestimmt werden.

Der hydraulische Antriebsstrang kann ausschließlich dem Antreiben der Feuerlöschpumpe dienen, kann aber optional auch für weitere Antriebsmaßnahmen innerhalb des BOS-Fahrzeuges genutzt werden. Beispielsweise kann das BOS-Fahrzeug zusätzlich zu der Feuerlöschpumpe über mindestens eine fluidbetätigte Verbrauchereinheit verfügen, die durch seitens der Hydraulikpumpe des hydraulischen Antriebsstranges gefördertes Hydraulikfluid betätigbar ist. Bei einer fluidbetätigten Verbrauchereinheit kann es sich beispielsweise um eine hydraulisch betätigte Seilwinde handeln. Auch eine hydraulische Fahrzeug-Stützvorrichtung, eine hydraulisch ausfahrbare Leiter oder eine hydraulisch betätigbare Kranvorrichtung können beispielsweise als mittels des hydraulischen Antriebsstranges durch Fluidkraft betätigbare Verbrauchereinheit vorhanden sein.

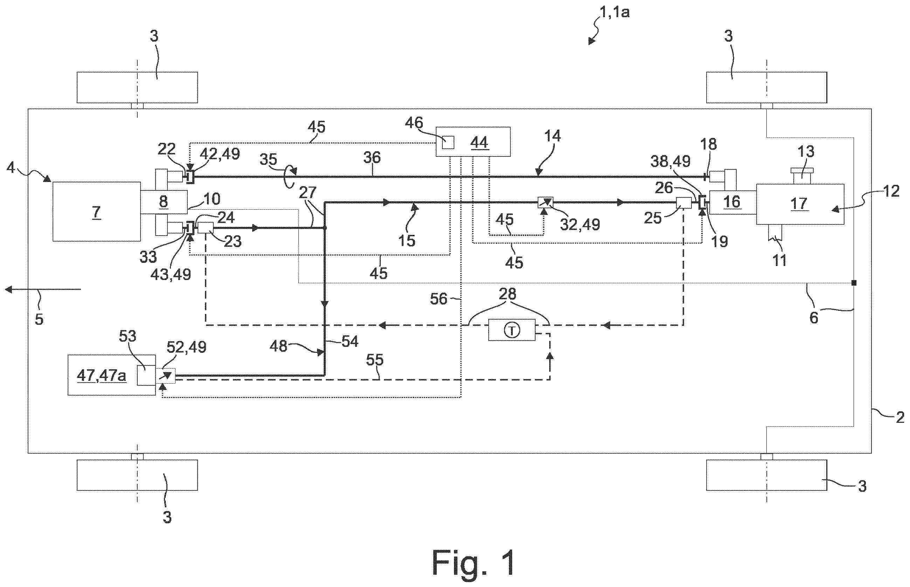

Nachfolgend wird die Erfindung anhand der beiliegenden Zeichnung näher erläutert. In dieser zeigen
- Figur 1: eine schematische Darstellung eines bevorzugten Ausführungsbeispiels des erfindungsgemäßen BOS-Fahrzeuges in einer Draufsicht, wobei der mechanische Antriebsstrang mit einem am Fahrzeuggetriebe angeordneten Nebenabtrieb und der hydraulische Antriebsstrang mit einem ebenfalls am Fahrzeuggetriebe angeordneten Zusatz-Nebenabtrieb koppelbar oder gekoppelt ist,

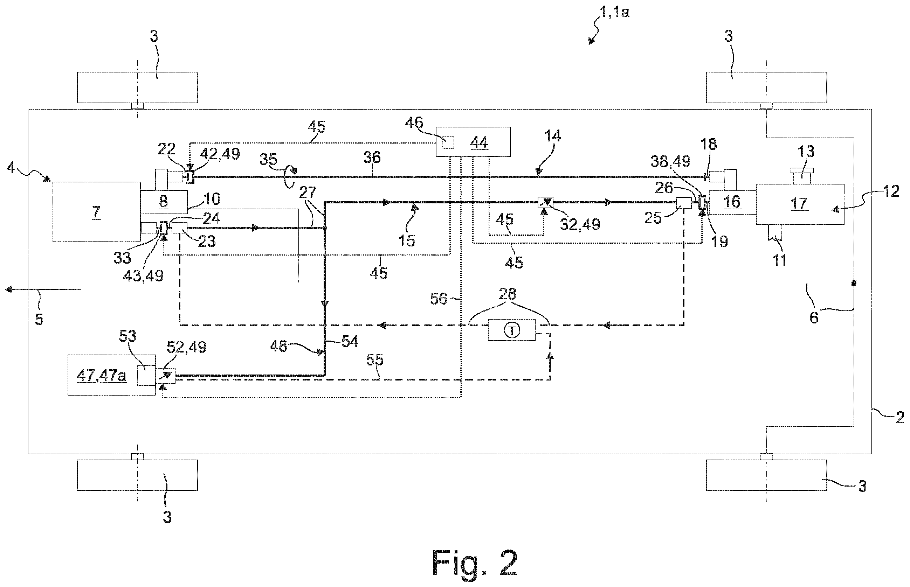

- Figur 2: in einer der Figur 1 entsprechenden schematischen Darstellungsweise ein zweites Ausführungsbeispiel des erfindungsgemäßen BOS-Fahrzeuges, wobei der mechanische Antriebsstrang mit einem am Fahrzeuggetriebe angeordneten Nebenabtrieb und der hydraulische Antriebsstrang mit einem am Antriebsmotor angeordneten Zusatz-Nebenabtrieb koppelbar oder gekoppelt ist,

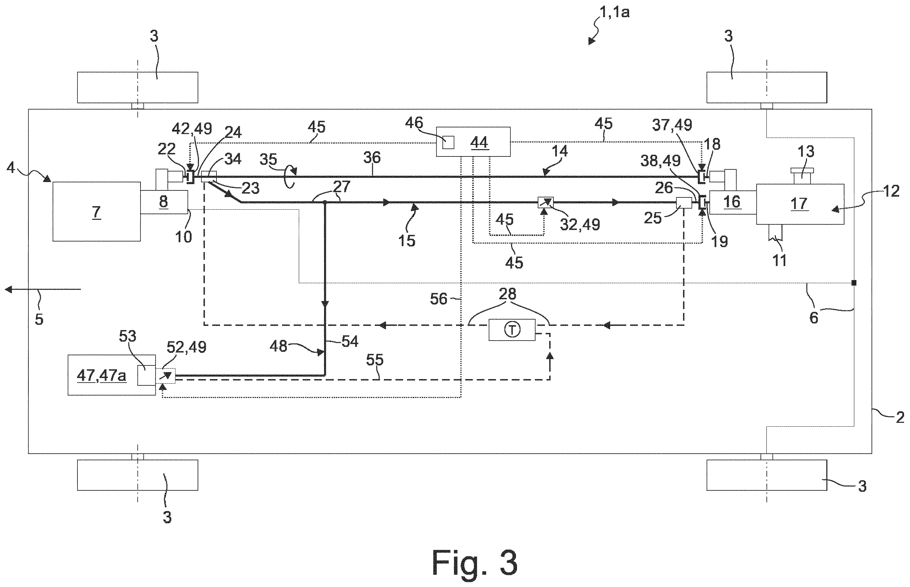

- Figur 3: in einer der Figur 1 entsprechenden schematischen Darstellungsweise ein drittes Ausführungsbeispiel des erfindungsgemäßen BOS-Fahrzeuges, wobei beide Antriebsstränge mit ein und demselben am Fahrzeuggetriebe angeordneten Nebenabtrieb koppelbar oder gekoppelt sind, wobei die Kopplung des hydraulischen Antriebsstranges mittelbar über einen Durchtrieb des mechanischen Antriebsstranges erfolgt, und

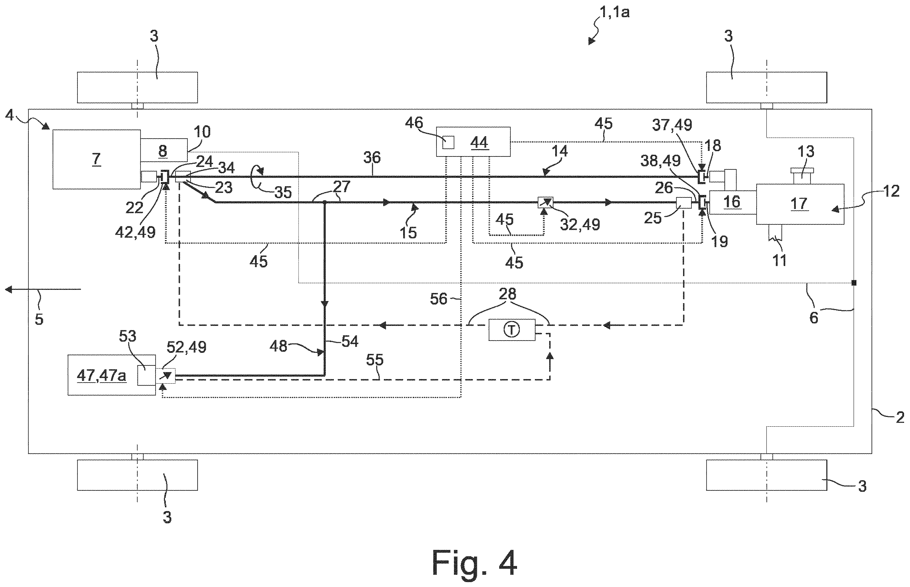

- Figur 4: in einer der Figur 1 entsprechenden schematischen Darstellungsweise ein viertes Ausführungsbeispiel des erfindungsgemäßen BOS-Fahrzeuges, wobei die beiden Antriebsstränge mit ein und demselben am Antriebsmotor angeordneten Nebenabtrieb koppelbar oder gekoppelt sind, wobei die Kopplung des hydraulischen Antriebsstranges wiederum indirekt über einen Durchtrieb des mechanischen Antriebsstranges erfolgt.

Die Figuren 1 bis 4 zeigen vier vorteilhafte Ausführungsbeispiele eines erfindungsgemäßen BOS-Fahrzeuges 1, also eines von Behörden und Organisationen mit Sicherheitsaufgaben (BOS) eingesetzten Fahrzeuges, das man auch als Einsatzfahrzeug bezeichnen könnte. Bei den illustrierten Ausführungsbeispielen handelt es sich um Feuerwehrfahrzeuge 1a, ohne dass die Erfindung darauf beschränkt sein soll. Weitere Beispiele von BOS-Fahrzeugen, in denen die Erfindung verwirklicht sein kann, sind THW-, DLRG-, Katastrophenschutz- und Polizeifahrzeuge.

Sofern im Einzelfall keine abweichenden Angaben gemacht werden, bezieht sich die nachfolgende Beschreibung auf sämtliche Ausführungsbeispiele.

Das BOS-Fahrzeug 1 hat einen auch als Fahrgestell bezeichenbaren Rahmen 2, an dem über geeignete Radaufhängungen mehrere zur Fortbewegung des BOS-Fahrzeuges 1 nutzbare Fahrzeugräder 3 angeordnet sind, exemplarisch vier an der Zahl. Bei mindestens einem und bevorzugt mehreren Fahrzeugrädern 3 handelt es sich um angetriebene Räder, die durch eine an dem Rahmen 2 aufgehängte Antriebseinheit 4 zum Hervorrufen einer durch einen Pfeil illustrierten Fahrzeugbewegung 5 mit einem Antriebsdrehmoment beaufschlagbar sind. Für die Übertragung des Antriebsdrehmoments ist in an sich bekannter Weise eine schematisch angedeutete, zwischen die Antriebseinheit 4 und das oder die angetriebenen Fahrzeugräder 3 eingeschaltete Drehmomentübertragungseinrichtung 6 vorhanden.

Die Antriebseinheit 4 enthält einen Antriebsmotor 7 und ein an dem Antriebsmotor 7 angeordnetes Fahrzeuggetriebe 8. Die Antriebsleistung des Antriebsmotors 7 wird in das Fahrzeuggetriebe 8 eingeleitet und von dort an die Drehmomentübertragungseinrichung 6 abgegeben. Bei dem Antriebsmotor 7 kann es sich um einen Verbrennungsmotor und/oder um einen Elektromotor handeln.

Das Fahrzeuggetriebe 8 verfügt über einen Hauptabtrieb 10, der mit der Drehmomentübertragungseinrichtung 6 antriebsmäßig verbunden ist und der das auf die Fahrzeugräder 3 zu übertragende Antriebsdrehmoment ausgibt. Die Antriebseinheit 4 enthält eine nicht weiter illustrierte, zwischen den Antriebsmotor 7 und das Fahrzeuggetriebe 8 eingeschaltete Fahrzeugkupplung, durch die das Fahrzeuggetriebe 8 in an sich bekannter Weise wahlweise mit dem Antriebsmotor 7 koppelbar oder - für einen Fahrzeugstillstand oder einen Gangwechsel - abkoppelbar ist.

Das BOS-Fahrzeug 1 ist des Weiteren mit einer Feuerlöschpumpe 12 ausgestattet, bei der es sich insbesondere um eine Feuerlöschkreiselpumpe handelt. Die Feuerlöschpumpe 12 ist exemplarisch als eine Einbaupumpe ausgebildet, die in nicht näher illustrierter Weise direkt oder indirekt an dem Rahmen 2 befestigt ist.

Die Feuerlöschpumpe 12 hat mindestens einen Druckausgang 13, an dem ein mit einem Strahlrohr versehener Druckschlauch anschließbar ist. Die Feuerlöschpumpe 12 hat ferner einen Sauganschluss 11, der mit einem im BOS-Fahrzeug verbauten und/oder externen Löschfluidreservoir verbunden oder verbindbar ist, durch das ein Löschfluid - in der Regel Wasser oder ein Wasser-Schaum-Gemisch - bereitgestellt wird.

Die Feuerlöschpumpe 12 ist aktivierbar, um einen Förderbetrieb auszuführen, in dem sie das bereitgestellte Löschfluid aus dem Löschfluidreservoir in den angeschlossenen Druckschlau fördert, so dass das Löschfluid zur Brandbekämpfung oder anderen Zwecken ausgegeben bzw. verspritzt werden kann.

Außer in den mit einem Förderbetrieb einhergehenden aktivierten Betriebszustand kann die Feuerlöschpumpe 12 in einen deaktivierten Betriebszustand versetzt werden, in dem die Förderleistung gleich Null ist.

Das BOS-Fahrzeug 1 ist vorteilhafterweise mit einer Hybrid-Antriebstechnik ausgestattet, die es ermöglicht, die Feuerlöschpumpe 12 zum einen rein mechanisch und zum anderen unter Einsatz eines hydraulischen Prinzips mit der für ihren Förderbetrieb erforderlichen Antriebskraft zu versorgen. Zur Realisierung des Hybrid-Antriebsprinzips ist das BOS-Fahrzeug mit einem bevorzugt rein mechanisch arbeitenden, mechanischen Antriebsstrang 14 und mit einem dem mechanischen Antriebsstrang zweckmäßigerweise funktionell parallelgeschalteten hydraulischen Antriebsstrang 15 ausgestattet. Beide Antriebsstränge 14, 15 sind für eine kraftübertragende Kopplung der Antriebseinheit 4 mit der Feuerlöschpumpe 12 ausgebildet.

Der mechanische Antriebsstrang 14 ist derart mit der Feuerlöschpumpe 12 koppelbar oder gekoppelt, dass er in die Feuerlöschpumpe 12 ein erstes Pumpen-Antriebsdrehmoment einleiten kann. Der hydraulische Antriebsstrang 15 ist mit der Feuerlöschpumpe 12 derart koppelbar oder gekoppelt, dass er in die Feuerlöschpumpe 12 ein zweites Pumpen-Antriebsdrehmoment einleiten kann. Vorzugsweise können das erste Pumpen-Antriebsdrehmoment und das zweite Pumpen-Antriebsdrehmoment sowohl einzeln als auch zeitgleich in die Feuerlöschpumpe 12 eingespeist werden.

Die Feuerlöschpumpe 12 ist zweckmäßigerweise mit einem zum Empfang der Pumpen-Antriebsdrehmomente ausgebildeten mechanischen Getriebe ausgestattet, das als Eingangsgetriebe 16 bezeichnet sei und bei dem es sich insbesondere um ein an eine Fördereinheit 17 der Feuerlöschpumpe 12 angebautes Anbaugetriebe handelt. Die Fluidfördereinheit 17 weist den mindestens einen Druckausgang 13, den Sauganschluss 11 und die für eine Feuerlöschpumpe 12 typischen Fördermittel auf, wobei die Fördermittel beispielsweise ein im Betrieb rotierendes Pumpenrad enthalten, insbesondere mit axialer Saugseite zünd radialer Druckseite. Die Fördermittel sind mechanisch mit dem Eingangsgetriebe 16 gekoppelt sind, um von dort zur Ausführung des Förderbetriebes rotativ angetrieben zu werden.

Für die Einleitung des ersten Pumpen-Antriebsdrehmoments weist das Eingangsgetriebe 16 einen ersten Getriebeeingang 18 auf und für die Einleitung des zweiten Pumpen-Antriebsdrehmoments verfügt es über einen bezüglich des ersten Getriebeeingangs 18 separaten zweiten Getriebeeingang 19. Der mechanische Antriebsstrang 14 ist ausgangsseitig mit dem ersten Getriebeeingang 18 drehmomentübertragend koppelbar oder gekoppelt, während der hydraulische Antriebsstrang 15 ausgangsseitig mit dem zweiten Getriebeeingang 19 drehmomentübertragend koppelbar oder gekoppelt ist.

Der mechanische Antriebsstrang 14 erstreckt sich zwischen dem ersten Getriebeeingang 18 und einem als Bestandteil der Antriebseinheit 4 ausgebildeten Nebenabtrieb 22. Über den Nebenabtrieb 22 ist der mechanische Antriebsstrang 14 mit der Antriebseinheit 4 drehmomentübertragend koppelbar oder gekoppelt.

Der Nebenabtrieb 22 ist für einen Drehmomentausgabe ausgelegt. Beispielsweise weist er eine Zapfwelle auf, an die der mechanische Antriebsstrang 14 in einer die Übertragung eines Drehmoments ermöglichenden Weise ansteckbar oder angesteckt ist. Auch der erste Getriebeeingang 18 kann eine Zapfwelle zur Verbindung mit dem mechanischen Antriebsstrang 14 aufweisen.

Der hydraulische Antriebsstrang 15 ist zwischen die Antriebseinheit 4 und den zweiten Getriebeeingang 19 eingegliedert. Der hydraulische Antriebsstrang 15 enthält eine Hydraulikpumpe 23, die durch die Antriebseinheit 4 mechanisch rotativ antreibbar ist, um ein Hydraulikfluid zu fördern. Die Hydraulikpumpe 23 verfügt zweckmäßigerweise über eine im Folgenden als Eingangsschnittstelle 24 bezeichnete, mit einem beweglichen internen Pumpglied der Hydraulikpumpe 23, insbesondere ein Pumprotor, verbundene mechanische Schnittstelle, über die sie zum Empfang eines Drehmoments mit der Antriebseinheit 4 koppelbar oder gekoppelt ist.

Der hydraulische Antriebsstrang 15 enthält ferner einen mit der Feuerlöschpumpe 12 drehmomentübertragend koppelbaren oder gekoppelten Hydraulikmotor 25, der durch die Hydraulikpumpe 23 rotativ antreibbar ist. Zur drehmomentübertragenden Kopplung des Hydraulikmotors 25 mit der Feuerlöschpumpe 12 ist ein durch Fluidkraft zu einer rotativen Abtriebsbewegung antreibbares Abtriebsglied des Hydraulikmotors 25 über eine als Ausgangsschnittstelle 26 bezeichnete mechanische Schnittstelle mit dem zweiten Getriebeeingang drehmomentübertragend koppelbar oder gekoppelt.

Zwischen der Hydraulikpumpe 23 und dem Hydraulikmotor 25 verläuft ein beispielhaft von mindestens einer Hydraulikleitung gebildeter Förderstrang 27, durch den eine Fluidverbindung zwischen einem Druckausgang der Hydraulikpumpe 23 und einem Druckeingang des Hydraulikmotors 25 realisiert ist und durch den hindurch ein von der Hydraulikpumpe 23 förderbares oder gefördertes Hydraulikfluid als Antriebsfluid zur Erzeugung der rotativen Abtriebsbewegung zu dem Hydraulikmotor 25 strömen kann.

Der hydraulische Antriebsstrang 15 ist zweckmäßigerweise als ein Hydraulikkreislauf aufgebaut und enthält zusätzlich zu dem Förderstrang 27 einen diesbezüglich parallel geschalteten, von Fluid durchströmbaren Verbindungsstrang 28, der an einen Eingang der Hydraulikpumpe 23 und einen Ausgang des Hydraulikmotors 25 angeschlossen ist und in dessen Verlauf ein Tank T platziert ist, der das für den Betrieb des hydraulischen Antriebsstranges 15 erforderliche Hydraulikfluid bereitstellt.

Während eines mittels des hydraulischen Antriebsstranges 15 realisierten Förderbetriebes der Feuerlöschpumpe 12 wird Hydraulikfluid im Kreislauf durch den Förderstrang 27, den Verbindungsstrang 28, die Hydraulikpumpe 23 und den Hydraulikmotor 25 hindurch gefördert. Hierzu erfährt die Hydraulikpumpe 23 über die Eingangsschnittstelle 24 einen rotativen Antrieb durch die Antriebseinheit 4, wobei das strömende Hydraulikfluid eine rotative Abtriebsbewegung der Ausgangsschnittstelle 26 des Hydraulikmotors 25 hervorruft und dementsprechend ein Pumpen-Antriebsdrehmoment über den zweiten Getriebeeingang 19 in die Feuerlöschpumpe 12 eingeleitet wird.

Zweckmäßigerweise weist der hydraulische Antriebsstrang 15 ein Durchflussregulierventil 32 auf, das exemplarisch in den Förderstrang 27 eingeschaltet ist und das eine Leistungsregulierung der Feuerlöschpumpe 12 ermöglicht, insbesondere auf stufenloser Basis. Das Durchflussregulierventil 32 ist zweckmäßigerweise als ein Proportionalventil ausgebildet, insbesondere mit einer linearen Kennlinie. Das Durchflussregulierventil 32 ist beispielsweise von einer manuell und/oder elektrisch betätigbaren Bauart.

Der dem mechanischen Antriebsstrang 14 zugeordnete Nebenabtrieb 22 der Antriebseinheit 4 kann gemäß den Ausführungsbeispielen der Figuren 1, 2 und 3 am Fahrzeuggetriebe 8 der Antriebseinheit 4 angeordnet sein. Eine hierzu alternative Anordnung ist bei dem Ausführungsbeispiel der Figur 4 realisiert, bei dem der Nebenabtrieb 22 am Antriebsmotor 7 der Antriebseinheit 4 angeordnet ist.

Die antriebsmäßige Verbindung zwischen dem hydraulischen Antriebsstrang 15 und der Antriebseinheit 4 kann gemäß den Ausführungsbeispielen der Figuren 1 und 2 an einem bezüglich des Nebenabtriebes 22 gesondert ausgebildeten Zusatz-Nebenabtrieb 33 der Antriebseinheit 4 erfolgen. Dieser Zusatz-Nebenabtrieb 33 ist drehmomentübertragend mit der Hydraulikpumpe 23 und exemplarisch mit deren Eingangsschnittstelle 24 koppelbar oder gekoppelt.

Das voneinander getrennte Antreiben der beiden Antriebsstrange 14, 15 durch einen Nebenabtrieb 22 und einen diesbezüglich zusätzlichen Zusatz-Nebenabtrieb 33 ermöglicht eine besonders variable Betätigung der Feuerlöschpumpe 12. Vorzugsweise können an dem Nebenabtrieb 22 und an dem Zusatz-Nebenabtrieb 33 gleiche und/oder voneinander abweichende Drehzahlen abgegriffen werden. Bevorzugt ist mindestens eine nicht weiter illustrierte Einstelleinrichtung vorhanden, die eine variable Drehzahleinstellung sowohl des Nebenabtriebes 22 als auch des Zusatz-Nebenabtriebes 33 ermöglicht.

Bei dem Ausführungsbeispiel der Figur 1 befindet sich der Zusatz-Nebenabtrieb 33 entsprechend des Nebenabtriebs 22 am Fahrzeuggetriebe 8 der Antriebseinheit 4.

Gemäß einer in Figur 2 illustrierten alternativen Ausgestaltung kann der Zusatz-Nebenabtrieb 33 am Antriebsmotor 7 der Antriebseinheit 4 angeordnet sein. Gemäß Figur 2 ist ferner der Nebenabtrieb 22 analog zum Ausführungsbeispiel der Figur 1 am Fahrzeuggetriebe 8 angeordnet.

Bei einem nicht illustrierten Ausführungsbeispiel befinden sich sowohl der Nebenabtrieb 22 als auch ein diesbezüglich zusätzlich vorhandener Zusatz-Nebenabtrieb 33 am Antriebsmotor 7, so dass das Fahrzeuggetriebe 8 antriebsmäßig insbesondere nur für die Erzeugung des Fahrantriebes des BOS-Fahrzeuges zuständig ist.

Bei einer anderen, ebenfalls nicht illustrierten Ausführungsform befindet sich der Nebenabtrieb am Antriebsmotor 7 und der Zusatz-Nebenabtrieb 33 am Fahrzeuggetriebe 8.

Das BOS-Fahrzeug 1 kann einen dahingehenden Aufbau haben, dass die beiden Antriebsstränge 14, 15 gemeinsam durch ein und denselben Nebenabtrieb 22 betätigt werden. Dies trifft auf die Ausführungsbeispiele der Figuren 3 und 4 zu. In beiden Fällen ist die Hydraulikpumpe 23 zum Zwecke ihres Antreibens, ebenso wie der mechanische Antriebsstrang 14, mit dem Nebenabtrieb 22 der Antriebseinheit 4 drehmomentübertragend koppelbar oder gekoppelt. Die Bauformen der Figuren 3 und 4 unterscheiden sich dabei in der Platzierung des Nebenabtriebes 22, der beim Ausführungsbeispiel der Figur 3 am Fahrzeuggetriebe 8 und beim Ausführungsbeispiel der Figur 4 am Antriebsmotor 7 angeordnet ist.

Bevorzugt wird die einheitliche Kopplung der beiden Antriebsstränge 14, 15 mit dem Nebenabtrieb 22 mittels eines Durchtriebes 34 des mechanischen Antriebsstranges 14 realisiert. Der Durchtrieb 34 ist bei beiden Ausführungsbeispielen der Figuren 3 und 4 ein Bestandteil der Hydraulikpumpe 23 und fungiert quasi als Eingangsschnittstelle 24 der Hydraulikpumpe 23. Eine in der Zeichnung durch einen Pfeil illustrierte Antriebsdrehbewegung 35 des mechanischen Antriebsstranges 14 geht mit einer entsprechenden Drehbewegung des Durchtriebes 34 einher, aus der eine Antriebsdrehbewegung des beweglichen Pumpgliedes der Hydraulikpumpe 23 resultiert.

Man kann somit sagen, dass der hydraulische Antriebsstrang 15 durch den mechanischen Antriebsstrang 14 angetrieben wird, der seinerseits direkt durch den Nebenabtrieb 22 angetrieben wird, sodass letztlich auch der hydraulische Antriebsstrang 15 durch den Nebenabtrieb 22 angetrieben wird, und zwar mittekbar über den mechanischen Antriebsstrang 14.

Bei diesen Ausführungsbeispielen ist die Drehgeschwindigkeit des Nebenabtriebes 22 maßgeblich für sowohl die Drehgeschwindigkeit der Antriebsbewegung 35 des mechanischen Antriebsstranges 14 als auch für die Drehgeschwindigkeit der Hydraulikpumpe 23.

Bevorzugt verfügt der mechanische Antriebsstrang 14 über eine im Betrieb rotierende Gelenkwelle 36, die an ihrem einen Ende mit dem Nebenabtrieb 22 und an ihrem entgegengesetzten, anderen Ende mit der Feuerlöschpumpe 12 drehmomentübertragend koppelbar oder gekoppelt ist.

In Ermangelung noch zu erläuternder optionaler schaltbarer Kupplungen kann sich die Gelenkwelle 36 gemäß den Ausführungsbeispielen der Figuren 1 und 2 ausgehend von dem Nebenabtrieb 22 bis hin zu dem ersten Getriebeeingang 18 erstrecken.

Bei dem Ausführungsbeispiel der Figuren 3 und 4 ist die Gelenkwelle 36 mit dem Durchtrieb 34 in Reihe geschaltet. Der Durchtrieb 34 ist einerseits antriebsmäßig mit dem Nebenabtrieb 22 verbunden und andererseits mit der sich anschließenden Gelenkwelle 36, sodass er das vom Nebenabtrieb 22 zur Verfügung gestellte Drehmoment mechanisch zu der Gelenkwelle 36 durchleitet..

Es ist vorteilhaft, wenn eine oder mehrere schaltbare Kupplungen vorhanden sind, mit denen sich die mittels des mechanischen Antriebsstranges 14 und/oder des hydraulischen Antriebsstranges 15 realisierbare Drehmomentübertragung wahlweise herstellen oder unterbrechen lässt. Auf diese Weise können beispielsweise momentan nicht benötigte Komponenten zur Verschleißminderung und/oder zur Energieeinsparung stillgesetzt werden. Nachstehend werden einige besonders vorteilhafte Kupplungsmaßnehmen beschrieben, die optional auch entfallen können und die in beliebigen Kombinationen miteinander kombiniert sein können.

Vorteilhaft ist es, wenn entsprechend den Ausführungsbeispielen der Figuren 3 und 4 zwischen den mechanischen Antriebsstrang 14 und den ersten Getriebeeingang 18 des Eingangsgetriebes 16 eine schaltbare erste Getriebeeingangskupplung 37 eingegliedert ist und/oder wenn zwischen den Hydraulikmotor 25 des hydraulischen Antriebsstranges 15 und den zweiten Getriebeeingang 19 des Eingangsgetriebes 16 eine schaltbare zweite Getriebeeingangskupplung 38 eingegliedert ist. Jede Getriebeeingangskupplung 37, 38 ermöglicht ein wahlweises drehmomentmäßiges Ankoppeln oder Abkoppeln des zugeordneten Antriebsstranges 14, 15 bezüglich der Feuerlöschpumpe 12. Jede Getriebeeingangskupplung 37, 38 kann wahlweise eine die Drehmomentübertragung unterbrechenden ausgekuppelten Schaltzustand oder einen eine Drehmomentübertragung ermöglichenden eingekuppelten Schaltzustand einnehmen.

Es ist des Weiteren von Vorteil, wenn dem mechanischen Antriebsstrang 14 eine als Nebenabtriebskupplung 42 bezeichnete schaltbare Kupplung zugeordnet ist, die ein wahlweises drehmomentmäßiges Ankoppeln oder Abkoppeln des mechanischen Antriebsstranges 14 bezüglich der Antriebseinheit 4 ermöglicht. Bevorzugt ist die Nebenabtriebskupplung 42 entsprechende sämtlicher illustrierten Ausführungsbeispiele zwischen dem Nebenabtrieb 22 und dem mechanischen Antriebsstrang 14 eingeschaltet.

Die Nebenabtriebskupplung 42 kann wahlweise in einen eingekuppelten Schaltzustand oder in einen ausgekuppelten Schaltzustand versetzt werden, wobei sie im eingekuppelten Schaltzustand einen Kraftfluss zwischen dem Nebenabtrieb 22 und dem mechanischen Antriebsstrang 14 herstellt und im ausgekuppelten Schaltzustand unterbricht.

Wenn die beiden Antriebsstränge 14, 15 gemäß den Ausführungsbeispielen der Figuren 3 und 4 gemeinsam aus ein und demselben Nebenabtrieb 22 angetrieben werden, hat der ausgekuppelte Schaltzustand der Nebenabtriebskupplung 42 auch eine Unterbrechung des Kraftflusses zwischen dem Nebenabtrieb 22 und der Hydraulikpumpe 23 zur Folge.

Sofern das BOS-Fahrzeug 1 mit einem Zusatz-Nebenabtrieb 33 zum Antreiben des hydraulischen Antriebsstranges 15 ausgestattet ist, ist es vorteilhaft, wenn das BOS-Fahrzeug 1 eine schaltbare Zusatz-Nebenabtriebskupplung 43 aufweist, die ein wahlweises drehmomentmäßiges Ankoppeln oder Abkoppeln der Hydraulikpumpe 23 bezüglich des Zusatz-Nebenabtriebes 33 ermöglicht. Exemplarisch ist dies bei den Ausführungsbeispielen der Figuren 1 und 2 der Fall, wobei es zweckmäßig ist, wenn die Zusatz-Nebenabtriebskupplung 43 zwischen dem Zusatz-Nebenabtrieb 33 und der Hydraulikpumpe 23 eingegliedert ist.

Die Zusatz-Nebenabtriebskupplung 43 kann wahlweise in einen eingekuppelten oder in einen ausgekuppelten Schaltzustand versetzt werden, wobei sie im eingekuppelten Zustand einen Kraftfluss zwischen dem Zusatz-Nebenabtrieb 33 und der Hydraulikpumpe 23 bzw. deren Eingangsschnittstelle 24 herstellt und im ausgekuppelten Schaltzustand unterbricht.

Bei den illustrierten Ausführungsbeispielen ist die Nebenabtriebskupplung 42 dem Nebenabtrieb 22 in der Kraftflussrichtung nachgeordnet und auch die Zusatz-Nebenabtriebskupplung 43 ist dem zugeordneten Zusatz-Nebenabtrieb 33 bezogen auf die Kraftflussrichtung nachgeordnet. In beiden Fällen besteht jedoch die Möglichkeit, die betreffende Kupplung 42, 43 entgegen der Kraftflussrichtung vor dem Nebenabtrieb 22 bzw. vor dem Zusatz-Nebenabtrieb 33 einzugliedern, so dass mit Hilfe der jeweiligen Kupplung 42, 43 die Möglichkeit besteht, den Nebenabtrieb 22 bzw. den Zusatz-Nebenabtrieb 33 wahlweise abzuschalten oder zuzuschalten. Das Abschalten und Zuschalten der jeweiligen Kupplung 42, 43 bewirkt dann unmittelbar auch ein entsprechendes Deaktivieren oder Aktivieren des zugeordneten mechanischen oder hydraulischen Antriebsstranges 14, 15

Das BOS-Fahrzeug 1 ist bevorzugt mit einer elektronischen Steuereinrichtung 44 ausgestattet, durch die sowohl der mechanische Antriebsstrang 14 als auch der hydraulische Antriebsstrang 15 betriebsmäßig ansteuerbar ist, also der Betriebszustand der beiden Antriebsstränge 14, 15 und als Folge davon der Betriebszustand der Feuerlöschpumpe 12 vorgebbar ist.

Die beispielhafte elektronische Steuereinrichtung 44 ist für eine voneinander unabhängige Ansteuerung der beiden Antriebsstränge 14, 15 ausgebildet. Die beiden Antriebsstränge 14, 15 sind zweckmäßigerweise durch die elektronische Steuereinrichtung 44 derart ansteuerbar, dass zur gleichen Zeit jeweils nur einer der beiden Antriebsstränge 14, 15 im Betrieb ist oder dass beide Antriebsstränge 14, 15 gemeinsam in Betrieb sind. Auf diese Weise kann die Förderleistung der Feuerlöschpumpe 12 optimal mit hoher Flexibilität an die jeweiligen Gegebenheiten angepasst werden und es kann insbesondere auch bei Bedarf ein "Pump and Roll"-Betrieb durchgeführt werden, bei dem die Feuerlöschpumpe 12 mit einer zumindest weitestgehend konstanten Förderleistung bei gleichzeitiger Fahrbewegung 5 des BOS-Fahrzeuges 1 aufwartet.

Um die erforderlichen steuerungstechnischen Einflussnahmen zu ermöglichen, ist die elektronische Steuereinrichtung 44 über in der Zeichnung gepunktet angedeutete elektrische Steuerleitungen 45 mit elektrisch ansteuerbaren Steuergliedern 49 verbunden, bei denen es sich je nach Ausstattungsgrad unter anderem um das Durchflussregulierventil 32, die Nebenabtriebskupplung 42, die Zusatz-Nebenabtriebskupplung 43, die erste Getriebeeingangskupplung 37 und/oder die zweite Getriebeeingangskupplung 38 handelt. Die besagten Steuerglieder 49 sind dementsprechend jeweils insbesondere von einer elektrisch betätigbaren Bauart, es handelt sich also beispielsweise um elektrisch schaltbare Kupplungen 37, 38, 42, 43 und um ein elektrisch betätigbares Durchflussregulierventil 32.

Die elektronische Steuereinrichtung 44 kann bei Bedarf auch noch zur Ausführung weiterer sich auf Komponenten des BOS-Fahrzeuges 1 beziehende Steuerungsaufgaben ausgebildet sein.

Die elektronische Steuereinrichtung 44 ist zweckmäßigerweise mit einer manuell betätigbaren Bedieneinrichtung 46 ausgestattet, über die durch eine Bedienperson des BOS-Fahrzeuges 1 der Betriebszustand der Feuerlöschpumpe 12 manuell vorgebbar und/oder beeinflussbar ist. Die manuell betätigbare Bedieneinrichtung 46 kann für eine Fernbetätigung ausgebildet sein, entweder kabelgebunden oder drahtlos über Funksignale.

Der hydraulische Antriebsstrang 15 kann ausschließlich dem Betrieb der Feuerlöschpumpe 12 dienen. Allerdings besteht die Möglichkeit, den hydraulischen Antriebsstrang 15 ferner zu verwenden, um mindestens eine zusätzlich zu der Feuerlöschpumpe 12 vorhandene fluidbetätigte Verbrauchereinheit 47 des BOS-Fahrzeuges 1 zu betätigen. Exemplarisch verfügt das BOS-Fahrzeug 1 über eine als Seilwinde 47a ausgebildete fluidbetätigte Verbrauchereinheit 47.

Besagte Verbrauchereinheit 47 ist exemplarisch über einen hydraulischen Zweigstrang 48 an den hydraulischen Antriebsstrang 15 angeschlossen, und zwar zweckmäßigerweise zwischen der Hydraulikpumpe 23 und dem Durchflussregulierventil 32, wobei der Verbrauchereinheit 47 beispielhaft ein weiteres Durchflussregulierventil 52 zugeordnet ist, durch dessen Betätigung sich ein als weiterer Hydraulikmotor 53 bezeichneter Hydraulikmotor der Verbrauchereinheit 47 fluidisch ansteuern lässt. Exemplarisch kann damit ein Seil der Seilwinde 47a aufgewickelt oder abgewickelt werden.

Der hydraulische Zweigstrang 48 hat zweckmäßigerweise einen an den Förderstrang 27 angeschlossenen hydraulischen Vorlaufstrang 54, der zu der Verbrauchereinheit 47 führt, und ferner einen hydraulischen Rücklaufstrang 55, der die Verbrauchereinheit 47 mit dem Tank T verbindet, sodass ein Hydraulikfluid zur Betätigung der Verbrauchereinheit 47 im Kreislauf strömen kann.

Es können ohne Weiteres alternativ oder zusätzlich auch noch andere fluidbetätigte Verbrauchereinheiten 47 an den hydraulischen Antriebsstrang 15 angeschlossen sein.

Mit der optionalen elektronischen Steuereinrichtung 44 kann über mindestens eine weitere elektrische Steuerleitung 56 zweckmäßigerweise auch die Verbrauchereinheit 47 betriebsmäßig angesteuert werden, exemplarisch durch Ansteuerung des Weiteren Durchflussregulierventils 52. Letzteres ist hierzu insbesondere von einem elektrisch betätigbaren Typ und bildet ein weiteres elektrisch betätigbares Steuerglied 49.

Eine, mehrere oder sämtliche vorhandenen schaltbaren Kupplungen 37, 38, 42, 43 können als eine Fliehkraftkupplung ausgebildet sein, die drehzahlabhängig zwischen dem ausgekuppelten Schaltzustand und dem eingekuppelten Schaltzustand wechselt. Auf diese Weise können elektronische Steuerungsmaßnahmen reduziert werden oder gänzlich entfallen. Bevorzugt werden allerdings elektrisch schaltbare Bauformen, die beispielsweise auf einem elektromagnetischen Funktionsprinzip basieren.

## Patentansprüche

1. BOS-Fahrzeug, insbesondere Feuerwehrfahrzeug (1a), mit einer Antriebseinheit (4), die einen Antriebsmotor (7) und ein an dem Antriebsmotor (7) angeordnetes Fahrzeuggetriebe (8) aufweist, wobei das Fahrzeuggetriebe (8) über einen Hauptabtrieb (10) verfügt, an dem zum Hervorrufen einer Fahrzeugbewegung (5) des BOS-Fahrzeuges (1) ein Antriebsdrehmoment abgreifbar ist, und mit einer zum Fördern eines Löschfluides ausgebildeten Feuerlöschpumpe (12), die zum Ermöglichen ihres Förderbetriebes über einen mechanischen Antriebsstrang (14) mit einem Nebenabtrieb (22) der Antriebseinheit (4) drehmomentübertragend koppelbar oder gekoppelt ist, **dadurch gekennzeichnet, dass** die Feuerlöschpumpe (12) zum Ermöglichen ihres Förderbetriebes über einen zusätzlich zu dem mechanischen Antriebsstrang (14) vorhandenen hydraulischen Antriebsstrang (15) mit der Antriebseinheit (4) antriebsmäßig koppelbar oder gekoppelt ist, wobei der hydraulische Antriebsstrang (15) eine durch die Antriebseinheit (4) mechanisch antreibbare Hydraulikpumpe (23) und einen durch die Hydraulikpumpe (23) hydraulisch antreibbaren, mit der Feuerlöschpumpe (12) drehmomentübertragend koppelbaren oder gekoppelten Hydraulikmotor (25) aufweist.

2. BOS-Fahrzeug nach Anspruch 1, **dadurch gekennzeichnet, dass** der mechanische Antriebsstrang (14) eine einenends mit dem Nebenabtrieb (22) und andernends mit der Feuerlöschpumpe (12) koppelbare oder gekoppelte Gelenkwelle (36) aufweist.

3. BOS-Fahrzeug nach Anspruch 1 oder 2, **dadurch gekennzeichnet, dass** der hydraulische Antriebsstrang (15) ein zur Steuerung des Hydraulikmotors (25) vorgesehenes, zweckmäßigerweise als Proportionalventil ausgebildetes Durchflussregulierventil (32) aufweist, das in eine Fluidverbindung zwischen der Hydraulikpumpe (23) und dem Hydraulikmotor (25) eingeschaltet ist.

4. BOS-Fahrzeug nach einem der Ansprüche 1 bis 3, **dadurch gekennzeichnet, dass** der Nebenabtrieb (22) am Fahrzeuggetriebe (8) der Antriebseinheit (4) angeordnet ist.

5. BOS-Fahrzeug nach einem der Ansprüche 1 bis 3, **dadurch gekennzeichnet, dass** der Nebenabtrieb (22) am Antriebsmotor (7) der Antriebseinheit (4) angeordnet ist.

6. BOS-Fahrzeug nach einem der Ansprüche 1 bis 5, **dadurch gekennzeichnet, dass** die Feuerlöschpumpe (12) ein Eingangsgetriebe (16) aufweist, das einen mit dem mechanischen Antriebsstrang (14) drehmomentübertragend koppelbaren oder gekoppelten ersten Getriebeeingang (18) und einen mit dem Hydraulikmotor (25) des hydraulischen Antriebsstranges (15) drehmomentübertragend koppelbaren oder gekoppelten zweiten Getriebeeingang (19) aufweist, wobei zwischen den mechanischen Antriebsstrang (14) und den ersten Getriebeeingang (18) des Eingangsgetriebes (16) eine ein wahlweises drehmomentmäßiges Ankoppeln oder Abkoppeln des mechanischen Antriebsstranges (15) ermöglichende schaltbare erste Getriebeeingangskupplung (37) eingegliedert ist.

7. BOS-Fahrzeug nach Anspruch 6, **dadurch gekennzeichnet, dass** zwischen den Hydraulikmotor (25) des hydraulischen Antriebsstranges (15) und den zweiten Getriebeeingang (19) des Eingangsgetriebes (16) eine ein wahlweises drehmomentmäßiges Ankoppeln oder Abkoppeln des Hydraulikmotors (25) ermöglichende schaltbare zweite Getriebeeingangskupplung (38) eingegliedert ist.

8. BOS-Fahrzeug nach einem der Ansprüche 1 bis 7, **dadurch gekennzeichnet, dass** die Hydraulikpumpe (23) des hydraulischen Antriebsstranges (15) zu ihrem Antreiben, ebenso wie der mechanische Antriebsstrang (14), mit dem Nebenabtrieb (22) der Antriebseinheit (4) drehmomentübertragend koppelbar oder gekoppelt ist, wobei vorzugsweise die Hydraulikpumpe (23) für ihren mechanischen Antrieb über einen mit dem Nebenabtrieb (22) koppelbaren oder gekoppelten Durchtrieb (34) verfügt, bei dem es sich um einen Bestandteil des mechanischen Antriebsstranges (14) handelt.

9. BOS-Fahrzeug nach einem der Ansprüche 1 bis 8, **dadurch gekennzeichnet, dass** dem mechanischen Antriebsstrang (14) für ein bezüglich der Antriebseinheit (4) mögliches drehmomentmäßiges Ankoppeln oder Abkoppeln eine schaltbare Nebenabtriebskupplung (42) zugeordnet ist, die zweckmäßigerweise zwischen den Nebenabtrieb (22) und den mechanischen Antriebsstrang (14) eingegliedert ist.

10. BOS-Fahrzeug nach einem der Ansprüche 1 bis 7, **dadurch gekennzeichnet, dass** die Antriebseinheit (4) einen zusätzlich zu dem Nebenabtrieb (22) vorhandenen Zusatz-Nebenabtrieb (33) aufweist, der mit der Hydraulikpumpe (23) des hydraulischen Antriebsstranges (15) zu deren Antreiben drehmomentübertragend koppelbar oder gekoppelt ist.

11. BOS-Fahrzeug nach Anspruch 10, **dadurch gekennzeichnet, dass** dem hydraulischen Antriebsstrang (15) für ein bezüglich der Antriebseinheit (4) mögliches drehmomentmäßiges Ankoppeln oder Abkoppeln der Hydraulikpumpe (23) eine schaltbare Zusatz-Nebenabtriebskupplung (43) zugeordnet ist, die zweckmäßigerweise zwischen den Zusatz-Nebenabtrieb (33) und die Hydraulikpumpe (23) eingegliedert ist.

12. BOS-Fahrzeug nach Anspruch 10 oder 11, **dadurch gekennzeichnet, dass** der Zusatz-Nebenabtrieb (33) am Fahrzeuggetriebe (8) der Antriebseinheit (4) angeordnet ist.

13. BOS-Fahrzeug nach Anspruch 10 oder 11, **dadurch gekennzeichnet, dass** der Zusatz-Nebenabtrieb (33) am Antriebsmotor (7) der Antriebseinheit (4) angeordnet ist.

14. BOS-Fahrzeug nach einem der Ansprüche 1 bis 13, **dadurch gekennzeichnet, dass** es mit einer elektronischen Steuereinrichtung (44) ausgestattet ist, durch die sowohl der mechanische Antriebsstrang (14) als auch der hydraulische Antriebsstrang (15) betriebsmäßig ansteuerbar ist und die zweckmäßigerweise für eine voneinander unabhängige Ansteuerung der beiden Antriebsstränge (14, 15) ausgebildet ist, insbesondere derart, dass die beiden Antriebsstränge (14, 15) sowohl jeweils für sich allein als auch gemeinsam betreibbar sind.

15. BOS-Fahrzeug nach einem der Ansprüche 1 bis 14, **dadurch gekennzeichnet, dass** an den hydraulischen Antriebsstrang (15) zusätzlich zu der Feuerlöschpumpe (12) mindestens eine fluidbetätigte Verbrauchereinheit (47) des BOS-Fahrzeuges (1) angeschlossen ist, die durch seitens der Hydraulikpumpe (23) förderbares Hydraulikfluid betätigbar ist und bei der es sich zweckmäßigerweise um eine Seilwinde handelt.
